# EUROPEAN PATENT APPLICATION

(11) **EP 4 443 408 A1**
(43) Date of publication of application: **09.10.2024**
(21) Application number: 21966411.7
(22) Date of filing: 02.12.2021
(51) Int. Cl.: G08G 1/00, G01C 21/26

(54) **INFORMATION PROCESSING DEVICE**

(71) Applicant: Pioneer Corporation, Tokyo 113-0021 (JP)
(72) Inventor: KOBAYASHI, Takayoshi, Tokyo 113-0021 (JP)
(74) Representative: Grünecker Patent- und Rechtsanwälte PartG mbB
(86) International application number: PCT/JP2021/044303
(87) International publication number: WO 2023/100328

(57) **Abstract**

Useful information is efficiently collected. Schedule information including information regarding a schedule of a moving object is acquired. Moving object position information including information regarding a position of the moving object is acquired. When the moving object performs an operation different from a schedule of the moving object, a question based on the operation different from the schedule of the moving object is output. Answer information including information regarding an answer to the output question is acquired, and operation position information including information regarding a position where the operation different from the schedule of the moving object is performed is stored in association with the answer information.

## Description

### Technical Field

The present invention relates to an information processing device.

### Background Art

A vehicle such as a truck, which has a large vehicle height and a large vehicle width is not able to travel on a road with a height restriction or a road with a narrow road width in some cases. Therefore, there is a technique of searching for a route in consideration of a vehicle width and a vehicle height of a vehicle (for example, Patent Literature 1).

### Citation List

### Patent Literature

Patent Literature 1: JP 2007-33331 A

### Summary of Invention

### Technical Problem

However, there are roads of which information such as height restrictions and road widths have not been obtained. Therefore, in a case where there is a road of which such information has not been obtained on the searched route, a road on which the vehicle cannot travel is included in the searched route, depending on the vehicle.

There are roads on which vehicles cannot travel, such as a road under construction and a road in a school zone. In addition, there are roads where it is desirable to avoid traveling, such as roads where traffic congestion is likely to occur and roads leading to complaints from the neighborhood. Although a driver who has traveled on such a road of which the vehicle cannot travel or a road on which it is desirable to avoid traveling has information regarding such roads, such information that drivers have is not efficiently collected at present.

An example of an object to be achieved by the present invention is to efficiently collect useful information.

### Solution to Problem

In order to achieve the object, an invention according to claim 1 includes a schedule information acquisition processing unit that acquires schedule information including information regarding a schedule of a moving object, a moving object position information acquisition processing unit that acquires moving object position information including information regarding a position of the moving object, a question output processing unit that outputs a question based on an operation different from a schedule of the moving object when the moving object performs the operation different from the schedule of the moving object, an answer information acquisition processing unit that acquires answer information including information regarding an answer to the output question, and a storage processing unit that stores operation position information including information regarding a position where the operation different from the schedule of the moving object is performed in association with the answer information.

An invention according to claim 10 relates to an information processing method performed by a computer. The information processing method includes a schedule information acquisition processing step of acquiring schedule information including information regarding a schedule of a moving object, a moving object position information acquisition processing step of acquiring moving object position information including information regarding a position of the moving object, a question output processing step of outputting a question based on an operation different from a schedule of the moving object when the moving object performs the operation different from the schedule of the moving object, an answer information acquisition step of acquiring answer information including information regarding an answer to the output question, and a storage processing step of storing operation position information including information regarding a position where the operation different from the schedule of the moving object is performed in association with the answer information.

An invention according to claim 11 relates to an information processing program causing a computer to perform the information processing method according to claim 10.

An invention according to claim 12 stores the information processing program according to claim 11.

### Brief Description of Drawings

Fig. 1 is an information processing device 100 according to an example of the present invention.
Fig. 2 is a diagram for describing a relationship between the information processing device 100 and a moving object M.
Fig. 3 is a diagram illustrating a control unit 110.
Fig. 4 is a diagram illustrating an example of a processing operation performed in the control unit 110 when a moving object performs an operation different from a schedule of the moving object.

### Description of Embodiments

According to an embodiment of the present invention, an information processing device includes a schedule information acquisition processing unit that acquires schedule information including information regarding a schedule of a moving object, a moving object position information acquisition processing unit that acquires moving object position information including information regarding a position of the moving object, a question output processing unit that outputs a question based on an operation different from a schedule of the moving object when the moving object performs the operation different from the schedule of the moving object, an answer information acquisition processing unit that acquires answer information including information regarding an answer to the output question, and a storage processing unit that stores operation position information including information regarding a position where the operation different from the schedule of the moving object is performed in association with the answer information. For example, in the present embodiment, it is possible to collect a point where the moving object has performed an operation different from the schedule of the moving object and a reason thereof, and it is possible to efficiently collect useful information. As a result, it is possible to perform a route search by using the collected useful information and to share the collected useful information among drivers.

The schedule information may include a scheduled travel route along which the moving object is scheduled to travel. The operation different from the schedule of the moving object may be an operation in which the moving object travels to deviate from the scheduled travel route. The operation position information may include a position where a position of the moving object deviates from the scheduled travel route. The operation position information may include a route along which the moving object has moved after deviating from the scheduled travel route. In this manner, it is possible to collect useful information that has not been considered when the scheduled travel route is generated.

The schedule information may include a scheduled parking/stopping area in which the moving object is scheduled to be parked or stopped. The operation different from the schedule of the moving object may be an operation in which the moving object stops at a position other than the scheduled parking/stopping area. The operation position information may include a position where the moving object stops. In this manner, it is possible to collect useful information such as parking and stopping at a visit destination.

The schedule information may include information regarding one or more visit destinations to which the moving object goes around, and the storage processing unit may store the operation position information in association with the answer information and at least one of the one or more visit destinations. At least one of the one or more visit destinations may include a visit destination for which the moving object heads when the operation different from the schedule of the moving object is performed. In this manner, for example, in a case where the reason why the moving object deviates from the scheduled travel route, which has been acquired as the answer information is "because the moving object heads for a delivery entrance", it is possible to collect information regarding a route toward the delivery entrance of each visit destination. In addition, for example, in a case where the reason why the moving object has parked or stopped, which has been acquired as the answer information, is that the moving object is at a parking/stopping place in a visit destination, such as "loading place", it is possible to collect information regarding the parking/stopping place at the visit destination, such as "loading place" at each visit destination.

An image data acquisition processing unit that acquires image data around the moving object may be further provided, and the operation position information may include image data captured in vicinity of a position where the operation different from the schedule of the moving object is performed. In this manner, in addition to the point where the moving object has performed the operation different from the schedule of the moving object and the reason thereof, it is also possible to collect an image of this point and to more efficiently collect useful information.

A driver attribute acquisition unit that acquires an attribute of a driver of the moving object may be further provided, and the storage processing unit may store the operation position information in association with the answer information and the driver attribute. In this manner, it is possible to collect information regarding a driver who performs such an operation in addition to the point where the moving object has performed an operation different from the schedule of the moving object and the reason thereof, and it is possible to collect useful information more efficiently.

A driver attribute acquisition unit that acquires an attribute of a driver of the moving object may be further provided, and the storage processing unit may store the operation position information in association with the answer information only when the attribute of the driver of the moving object satisfies a predetermined condition. In this manner, it is possible to collect only information of a driver having a predetermined attribute. In particular, for example, by setting the predetermined condition to "the attribute of the driver of the moving object is a skilled driver", it is possible to collect only information regarding an operation performed by the skilled driver.

Further, according to another embodiment of the present invention, there is provided an information processing method performed by a computer. The information processing method includes a schedule information acquisition processing step of acquiring schedule information including information regarding a schedule of a moving object, a moving object position information acquisition processing step of acquiring moving object position information including information regarding a position of the moving object, a question output processing step of outputting a question based on an operation different from a schedule of the moving object when the moving object performs the operation different from the schedule of the moving object, an answer information acquisition step of acquiring answer information including information regarding an answer to the output question, and a storage processing step of storing operation position information including information regarding a position where the operation different from the schedule of the moving object is performed in association with the answer information. For example, in the present embodiment, it is possible to collect a point where the moving object has performed an operation different from the schedule of the moving object and a reason thereof, and it is possible to efficiently collect useful information. As a result, it is possible to perform a route search by using the collected useful information and to share the collected useful information among drivers.

Furthermore, according to still another embodiment of the present invention, there is provided an information processing program causing a computer to perform the information processing method described above. In this manner, it is possible to efficiently collect useful information by using a computer.

In addition, according to still yet another embodiment of the present invention, there is provided a computer-readable storage medium storing the information processing program described above. In this manner, the information processing program described above can be distributed alone in addition to being incorporated in a device, and version upgrade or the like can be easily performed.

### Examples

### information Processing Device 100>

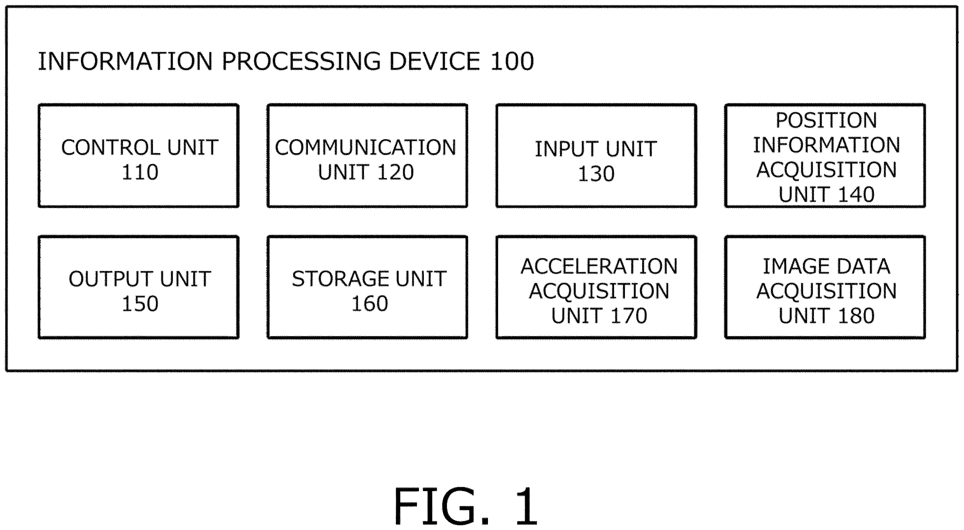

Fig. 1 is an information processing device 100 according to an example of the present invention. The information processing device 100 includes a control unit 110, a communication unit 120, an input unit 130, a position information acquisition unit 140, an output unit 150, and a storage unit 160.

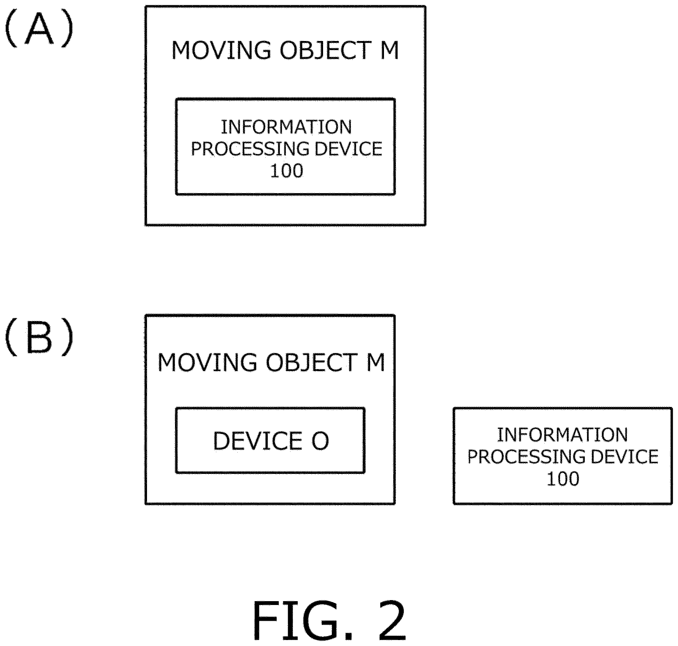

The information processing device 100 may be a device (for example, an in-vehicle device such as a drive recorder or a navigation system installed in a moving object M, or a smartphone in the moving object M) that moves with the moving object M such as a vehicle as illustrated in Fig. 2(A), or may be a device (for example, a server) that is installed outside the moving object M and communicates with a device O (for example, an in-vehicle device installed in the moving object M or a smartphone in the moving object M) that moves with the moving object M as illustrated in Fig. 2(B).

The control unit 110 is configured by, for example, a computer. The communication unit 120 is a communication device that transmits and receives information to and from another device. The input unit 130 is an input device that receives an input of information, such as a switch, a keyboard, a touch panel, a microphone, and a camera. The position information acquisition unit 140 is a device that acquires position information of an antenna or the like that receives a signal transmitted from a satellite constituting a global navigation satellite system (GNSS) including a global positioning system (GPS). The output unit 150 is an output device that outputs information, such as a display and a speaker. The storage unit 160 is a storage device that stores information, such as a hard disk and a memory.

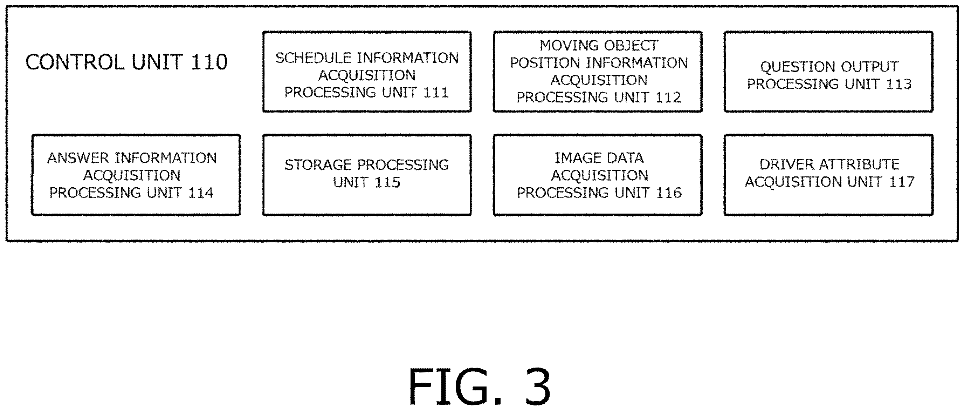

Fig. 3 is a diagram illustrating the control unit 110. The control unit 110 includes a schedule information acquisition processing unit 111, a moving object position information acquisition processing unit 112, a question output processing unit 113, an answer information acquisition processing unit 114, and a storage processing unit 115.

The schedule information acquisition processing unit 111 acquires schedule information including information regarding a schedule of a moving object. For example, the schedule information acquisition unit 111 acquires schedule information from another device such as a navigation system or a server device by performing communication using the communication unit 120. Furthermore, the schedule information acquisition processing unit 111 may acquire the schedule information by receiving an input from the input unit 130, or may acquire the schedule information by generating the schedule information based on information received from the input unit 130.

The information regarding the schedule of the moving object includes, for example, a scheduled travel route on which the moving object is scheduled to travel. The scheduled travel route on which the moving object is scheduled to travel is, for example, a route for the moving object to go around one or more visit destinations.

Furthermore, the information regarding the schedule of the moving object includes, for example, a scheduled parking/stopping area where the moving object is scheduled to be parked or stopped. The scheduled parking/stopping area is, for example, an area where the moving object is scheduled to be parked or stopped when the moving object goes around one or more visit destinations. For example, if the visit destination is a delivery source or a delivery destination, the moving object is parked or stopped at a loading place, a loading waiting place, or an unloading place. Thus, the scheduled parking/stopping area includes, for example, a loading place, a loading waiting place, and an unloading place. In addition, in a case where the visit destination is a business destination, the moving object is parked or stopped in a parking lot of the visit destination or a parking lot near the visit destination. Thus, the scheduled parking/stopping area includes, for example, a parking lot at a visit destination or a parking lot near the visit destination. In addition, the moving object is parked or stopped during the break. Thus, the scheduled parking/stopping area includes, for example, a rest area.

The moving object position information acquisition processing unit 112 acquires moving object position information including information regarding the position of the moving object. For example, the moving object position information acquisition unit 112 acquires the moving object position information from a moving object position information acquisition unit 140. Furthermore, for example, the moving object position information acquisition processing unit 112 may acquire the moving object position information from another device (for example, an in-vehicle device such as a navigation system installed in the moving object, or a smartphone in the moving object) that moves together with the moving object by performing communication using the communication unit 120.

The question output processing unit 113 outputs a question based on an operation different from the schedule of the moving object when the moving object performs the operation different from the schedule of the moving object. For example, the question output processing unit 113 outputs a question by the output unit 150. Furthermore, the question output processing unit 113 may output a question from another device (for example, an output device such as a display or a speaker installed in the moving object, or a smartphone in the moving object) that moves together with the moving object by performing communication using the communication unit 120.

For example, the question output processing unit 113 outputs a question asking for a reason why the moving object has performed the operation different from the schedule of the moving object, as the question based on the operation different from the schedule of the moving object.

The answer information acquisition processing unit 114 acquires answer information including information regarding an answer to the question output by the question output processing unit 113. For example, the answer information acquisition processing unit 114 acquires the answer information by receiving an input from the input unit 130. Furthermore, the answer information acquisition processing unit 114 may acquire the answer information from another device (for example, an input device such as a switch, a keyboard, a touch panel, a microphone, or a camera installed in the moving object, or a smartphone in the moving object) that moves together with the moving object by performing communication using the communication unit 120.

For example, the answer information acquisition processing unit 114 acquires, as the answer information, a reason why the moving object has performed the operation different from the schedule of the moving object.

The storage processing unit 115 stores operation position information including information regarding a position where the operation different from the schedule of the moving object has been performed, in association with the answer information. For example, the storage processing unit 115 stores the operation position information in the storage unit 160 in association with the answer information. Furthermore, the storage processing unit 115 may store the operation position information in association with the answer information in a storage device installed outside the moving object.

For example, the storage processing unit 115 stores the position where the operation different from the schedule of the moving object has been performed, in association with the reason why the moving object has performed the operation different from the schedule of the moving object.

As described above, in the present example, it is possible to collect a point where the moving object has performed an operation different from the schedule of the moving object and a reason thereof, and it is possible to efficiently collect useful information. As a result, it is possible to perform a route search by using the collected useful information and to share the collected useful information among drivers.

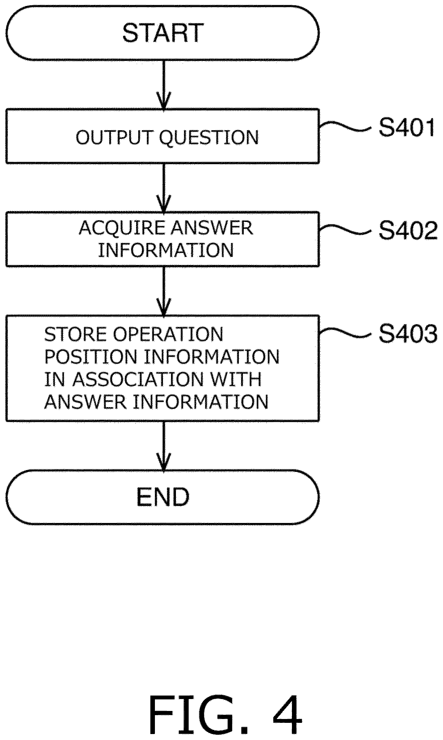

Fig. 4 is a diagram illustrating an example of a processing operation performed in the control unit 110 when a moving object performs an operation different from a schedule of the moving object. The question output processing unit 113 outputs a question based on the operation different from the schedule of the moving object (Step S401). The answer information acquisition processing unit 114 acquires answer information including information regarding an answer to the question (Step S402). The storage processing unit 115 stores operation position information including information regarding a position where the operation different from the schedule of the moving object has been performed, in association with the answer information (Step S403).

### <Travel Deviating from Scheduled Travel Route>

The scheduled travel route may include a road on which the vehicle cannot travel (for example, a road under construction, a road in a school zone, a road with a narrow width, or a road with a height restriction). In such a case, the moving object may travel to deviate from the scheduled travel route. In addition, depending on a visit destination, there may be an entrance for a business vehicle (for example, a delivery entrance) on the back side of a site or the like in addition to a front entrance, but such information of the visit destination is not obtained, and a travel route to the entrance for the business vehicle may not be included in the scheduled travel route. Even in such a case, the moving object may travel to deviate from the scheduled travel route. In addition, even in a case where the scheduled travel route includes a road on which traffic congestion is likely to occur, the moving object may travel to deviate from the scheduled travel route.

Therefore, in a case where the information regarding the schedule of the moving object includes the scheduled travel route on which the moving object is scheduled to travel, the question output processing unit 113 outputs a question (for example, "why did you deviate from the scheduled travel route?" or "why did you turn left earlier?") asking for the reason why the moving object has deviated from the scheduled travel route when the moving object has deviated from the scheduled travel route. Then, the answer information acquisition processing unit 114 acquires the reason why the moving object has deviated from the scheduled travel route, as the answer information, and the storage processing unit 115 stores a position where the moving object has deviated from the scheduled travel route in association with the reason why the moving object has deviated from the scheduled travel route. In addition, the storage processing unit 115 stores a route along which the moving object has moved after deviating from the scheduled travel route, in association with the reason why the moving object has deviated from the scheduled travel route.

In this manner, it is possible to collect useful information that has not been considered when the scheduled travel route is generated. As a result, it is possible to perform a route search by using the collected useful information and to share the collected useful information among drivers.

For example, in a case where the reason why the moving object has deviated from the scheduled travel route, which is acquired as the answer information, is "because construction is in progress", the storage processing unit 115 may store the position where the moving object has deviated from the scheduled travel route in association with the reason why "construction is in progress". In this manner, it is possible to collect information regarding the position of a road under construction.

For example, in a case where the reason why the moving object has deviated from the scheduled travel route, which is acquired as the answer information, is "because of the school zone", the storage processing unit 115 may store the position where the moving object has deviated from the scheduled travel route in association with the reason of "the school zone" and a time point at which the moving object has deviated from the scheduled travel route. In this manner, it is possible to collect information regarding a position of the school zone and the time point at which the moving object is in the school zone.

For example, in a case where the reason why the moving object has deviated from the scheduled travel route, which is acquired as the answer information, is "because of a height restriction", the storage processing unit 115 may further acquire the vehicle height of the moving object, and the storage processing unit 115 may store the position where the moving object has deviated from the scheduled travel route in association with the reason of "the height restriction" and the vehicle height of the moving object. In this manner, it is possible to collect information regarding a position of a road with a height restriction and how high a moving object cannot travel on the road.

For example, in a case where the reason why the moving object has deviated from the scheduled travel route, which is acquired as the answer information, is "because of a narrow road width", the storage processing unit 115 may further acquire the vehicle width of the moving object, and the storage processing unit 115 may store the position where the moving object has deviated from the scheduled travel route in association with the reason of "the narrow road width" and the vehicle width of the moving object. In this manner, it is possible to collect information regarding the position of a road with a narrow road width and how wide a moving object cannot travel on the road.

For example, in a case where the reason why the moving object has deviated from the scheduled travel route, which is acquired as the answer information, is "because of being heading for a delivery entrance", the storage processing unit 115 may store a route where the moving object has moved after deviating from the scheduled travel route in association with the reason of "heading for the delivery entrance". In this manner, it is possible to collect information regarding a route toward the delivery entrance.

In a case where the scheduled travel route is a route for going around one or more visit destinations, the storage processing unit 115 may store the operation position information in association with the answer information and at least one of the one or more visit destinations. At this time, the storage processing unit 115 may store the operation position information in association with the answer information and the visit destination for which the moving object heads when an operation different from the schedule of the moving object has been performed.

For example, in a case where the reason why the moving object has deviated from the scheduled travel route, which is acquired as the answer information, is "because the moving object heads for the delivery entrance", the storage processing unit 115 may store the route along which the moving object has moved after deviating from the scheduled travel route in association with the reason why the reason why "the moving object heads for the delivery entrance" and a visit destination for which the moving object heads when the operation different from the schedule of the moving object has been performed. In this manner, it is possible to collect information regarding a route toward a delivery entrance of each visit destination.

Here, the question output processing unit 113 detects that the moving object has deviated from the scheduled travel route based on the moving object position information acquired by the moving object position information acquisition processing unit 112, for example.

### <Parking/Stopping in Areas other than Scheduled Parking/Stopping Area>

As described above, the scheduled parking/stopping area includes a parking/stopping place (loading place, loading waiting place, unloading place, parking lot of visit destination) at a visit destination. However, in the case of a visit destination to be visited for the first time, such information regarding the parking/stopping place may not be obtained, and the scheduled parking/stopping area may not include the parking/stopping place at the visit destination to be visited for the first time.

Therefore, in a case where the information regarding the schedule of the moving object includes the scheduled parking/stopping area where the moving object is scheduled to be parked or stopped, the question output processing unit 113 outputs a question (for example, "why is parked or stopped?") asking for the reason why the moving object has been parked or stopped when the moving object has been parked or stopped outside the scheduled parking/stopping area. Then, the answer information acquisition processing unit 114 acquires the reason why the moving object has been parked or stopped outside a parking/stopping area as the answer information, and the storage processing unit 115 stores a position where the moving object has been parked or stopped in association with the reason why the moving object has been parked or stopped.

In this manner, it is possible to collect useful information such as parking and stopping at a visit destination. As a result, it is possible to share the collected useful information among drivers.

For example, in a case where the reason why the moving object has been parked or stopped, which is acquired as the answer information, is that the moving object is at a parking/stopping place in a visit destination, for example, "the moving object is at a loading place", the storage processing unit 115 may store the position where the moving object has been parked or stopped in association with the reason why the moving object is at the parking/stopping place in the visit destination such as "loading place", and a visit destination for which the moving object heads when the operation different from the schedule of the moving object has been performed. In this manner, it is possible to collect information regarding a parking/stopping place at a visit destination, for example, a "loading place" at each visit destination.

For example, in a case where the reason why the moving object has been parked or stopped, which is acquired as the answer information, is "a rest area", the storage processing unit 115 may store the position where the moving object is parked or stopped in association with the reason of "the rest area". In this manner, it is possible to collect information regarding the rest area.

Here, for example, when the moving object does not move for a predetermined time, the question output processing unit 113 determines that the moving object is parked or stopped. Furthermore, the question output processing unit 113 detects that the moving object has not moved for a predetermined time based on the moving object position information acquired by the moving object position information acquisition processing unit 112, for example. Furthermore, the question output processing unit 113 may detect that the moving object has not moved for a predetermined time based on an acceleration of the moving object. At this time, the information processing device 100 may further include an acceleration acquisition unit 170 that acquires the acceleration of the moving object, such as an acceleration sensor. Furthermore, the question output processing unit 113 may detect that the moving object has not moved for a predetermined time based on the speed of the moving object.

### <Storing Image Data>

The control unit 110 may further include an image data acquisition processing unit 116 that acquires image data (still image or moving image) around the moving object. Then, the operation position information associated with the answer information may include image data captured in the vicinity of the position where the operation different from the schedule of the moving object has been performed.

In this manner, in addition to the point where the moving object has performed the operation different from the schedule of the moving object and the reason thereof, it is also possible to collect an image of this point and to more efficiently collect useful information.

For example, in a case where the reason why the moving object has deviated from the scheduled travel route, which is acquired as the answer information, is that "there is a height restriction", image data of the periphery of a road with the height restriction can be acquired. In a case where a sign displaying the height restriction appears in the acquired image data, the acquired image can be analyzed and information regarding a numerical value of the restriction height can be acquired.

For example, in a case where the reason why the moving object has deviated from the scheduled travel route, which is acquired as the answer information, is "because the road width is narrow", image data around a road with a narrow road width can be acquired, the acquired image can be analyzed, and information regarding a numerical value of the road width can be acquired.

For example, in a case where the reason why the moving object has deviated from the scheduled travel route, which is acquired as the answer information, is "because the moving object goes to the delivery entrance", a still image or a moving image of a route to the delivery entrance can be acquired.

For example, in a case where the reason why the moving object has been parked or stopped is that the moving object is at a parking/stopping place in a visit destination, for example, "the moving object is at a loading place", a still image or a moving image of a route or a parking/stopping place on a site of the visit destination can be acquired.

At this time, the information processing device 100 may further include an image data acquisition unit 180 such as a camera, and the image data acquisition processing unit 116 may acquire the image data by the image data acquisition unit 180. Furthermore, the image data acquisition processing unit 116 may acquire image data from a device (for example, an image data acquisition device such as a camera of a drive recorder installed in the moving object, or a smartphone in the moving object) that moves together with the moving object by performing communication using the communication unit 120.

### <Driver Attribute>

The control unit 110 may further include a driver attribute acquisition unit 117 that acquires the attribute of a driver of the moving object. Then, the storage processing unit 115 may store the operation position information in association with the answer information and the driver attribute.

In this manner, it is possible to collect information regarding a driver who performs such an operation in addition to the point where the moving object has performed an operation different from the schedule of the moving object and the reason thereof, and it is possible to collect useful information more efficiently.

In addition, the storage processing unit 115 may store the operation position information in association with the answer information only when the attribute of the driver of the moving object satisfies a predetermined condition.

In this manner, it is possible to collect only information of a driver having a predetermined attribute. In particular, for example, by setting the predetermined condition to "the attribute of the driver of the moving object is a skilled driver", it is possible to collect only information regarding an operation performed by the skilled driver.

The driver attribute acquisition unit 117 acquires the driver attribute of the moving object by receiving an input from the input unit 130. Furthermore, the driver attribute acquisition unit 117 may acquire the driver attribute of the moving object from a device (for example, an input device such as a switch, a keyboard, a touch panel, a microphone, or a camera installed in the moving object, or a smartphone in the moving object) that moves together with the moving object by performing communication using the communication unit 120.

Hitherto, the present invention has been described above with reference to preferred embodiments of the present invention. Although the present invention has been described with reference to specific examples, various modifications and changes can be made to these specific examples without departing from the spirit and scope of the present invention set forth in the claims.

### Reference Signs List

- 100: INFORMATION PROCESSING DEVICE
- 110: CONTROL UNIT
- 111: SCHEDULE INFORMATION ACQUISITION PROCESSING UNIT
- 112: MOVING OBJECT POSITION INFORMATION ACQUISITION PROCESSING UNIT
- 113: QUESTION OUTPUT PROCESSING UNIT
- 114: ANSWER INFORMATION ACQUISITION PROCESSING UNIT
- 115: STORAGE PROCESSING UNIT
- 116: IMAGE DATA ACQUISITION PROCESSING UNIT
- 117: DRIVER ATTRIBUTE ACQUISITION UNIT
- 120: COMMUNICATION UNIT
- 130: INPUT UNIT
- 140: POSITION INFORMATION ACQUISITION UNIT
- 150: OUTPUT UNIT
- 160: STORAGE UNIT
- 170: ACCELERATION ACQUISITION UNIT
- 180: IMAGE DATA ACQUISITION UNIT

## Claims

1. An information processing device comprising:
a schedule information acquisition processing unit that acquires schedule information including information regarding a schedule of a moving object;
a moving object position information acquisition processing unit that acquires moving object position information including information regarding a position of the moving object;
a question output processing unit that outputs a question based on an operation different from a schedule of the moving object when the moving object performs the operation different from the schedule of the moving object;
an answer information acquisition processing unit that acquires answer information including information regarding an answer to the output question; and
a storage processing unit that stores operation position information including information regarding a position where the operation different from the schedule of the moving object is performed in association with the answer information.

2. The information processing device according to claim 1, wherein
the schedule information includes a scheduled travel route along which the moving object is scheduled to travel,
the operation different from the schedule of the moving object is an operation in which the moving object travels to deviate from the scheduled travel route, and
the operation position information includes a position where a position of the moving object deviates from the scheduled travel route.

3. The information processing device according to claim 2, wherein the operation position information includes a route along which the moving object has moved after deviating from the scheduled travel route.

4. The information processing device according to any one of claims 1 to 3, wherein
the schedule information includes a scheduled parking/stopping area in which the moving object is scheduled to be parked or stopped,
the operation different from the schedule of the moving object is an operation in which the moving object stops at a position other than the scheduled parking/stopping area, and
the operation position information includes a position where the moving object stops.

5. The information processing device according to any one of claims 1 to 4, wherein
the schedule information includes information regarding one or more visit destinations to which the moving object goes around, and
the storage processing unit stores the operation position information in association with the answer information and at least one of the one or more visit destinations.

6. The information processing device according to claim 5, wherein at least one of the one or more visit destinations includes a visit destination for which the moving object heads when the operation different from the schedule of the moving object is performed.

7. The information processing device according to any one of claims 1 to 6, further comprising
an image data acquisition processing unit that acquires image data around the moving object, wherein
the operation position information includes image data captured in vicinity of a position where the operation different from the schedule of the moving object is performed.

8. The information processing device according to any one of claims 1 to 7, further comprising
a driver attribute acquisition unit that acquires an attribute of a driver of the moving object, wherein
the storage processing unit stores the operation position information in association with the answer information and the driver attribute.

9. The information processing device according to any one of claims 1 to 7, further comprising
a driver attribute acquisition unit that acquires an attribute of a driver of the moving object, wherein
the storage processing unit stores the operation position information in association with the answer information only when the attribute of the driver of the moving object satisfies a predetermined condition.

10. An information processing method performed by a computer, the information processing method comprising:
a schedule information acquisition processing step of acquiring schedule information including information regarding a schedule of a moving object;
a moving object position information acquisition processing step of acquiring moving object position information including information regarding a position of the moving object;
a question output processing step of outputting a question based on an operation different from a schedule of the moving object when the moving object performs the operation different from the schedule of the moving object;
an answer information acquisition step of acquiring answer information including information regarding an answer to the output question; and
a storage processing step of storing operation position information including information regarding a position where the operation different from the schedule of the moving object is performed in association with the answer information.

11. An information processing program causing a computer to perform the information processing method according to claim 10.

12. A computer-readable storage medium storing the information processing program according to claim 11.
